# EUROPEAN PATENT SPECIFICATION

(11) **EP 1 974 567 B1**
(45) Date of publication and mention of the grant of the patent: **30.03.2011**
(21) Application number: 06820668.9
(22) Date of filing: 08.12.2006
(51) Int. Cl.: H04W 72/12

(54) **METHOD OF SCHEDULING GROUPS OF MOBILE LOW RATE DATA USERS**
VERFAHREN ZUR PLANUNG VON GRUPPEN VON MOBILEN NUTZERN NIEDRIGER DATENRATEN
PROCÉDÉ POUR PROGRAMMER DES GROUPES D'UTILISATEURS MOBILES DE DONNEES BAS DEBIT

(30) Priority: 17.01.2006 GB 0600870; 26.05.2006 GB 0610402
(43) Date of publication of application: 01.10.2008
(73) Proprietor: Nokia Siemens Networks GmbH & Co. KG, 81541 München (DE)
(72) Inventor: CHAPMAN, Thomas, Malcolm, Hampshire SO18 4RY (GB); KRAUSE, Joern, 12107 Berlin (DE); VIERING, Ingo, 81539 München (DE)
(86) International application number: PCT/GB2006/050442
(87) International publication number: WO 2007/083080

(56) References cited:
- WO-A-02/23760
- "Universal Mobile Telecommunications System (UMTS)" ETSI STANDARDS, EUROPEAN TELECOMMUNICATIONS STANDARDS INSTITUTE, SOPHIA-ANTIPO, FR, vol. 3-R2, no. V670, December 2005 (2005-12), XP014032593 ISSN: 0000-0001

## Description

This invention relates to a method of scheduling groups of mobile low rate data users.

In accordance with the present invention, a method of scheduling groups of mobile users comprises setting a group identifier for each mobile user; scheduling physical layer resources at a base station, for those users requiring resources; wherein the physical layer resources are divided into sub-resources shared between mobile users having the same group identifier; and providing an indication with the physical layer resources, of the occurrence and position within the physical layer resources of the sub-resources allocated to each mobile user in the group.

Preferably, the physical layer resources comprise a protocol data unit (PDU) and the sub-resources comprise sub-PDU's.

Preferably, the indication is provided in a higher layer header.

Preferably, the header is a medium access control header (MAC).

Preferably, the position of sub-resources for each user, within the physical layer resources, is pre-allocated; and the indicator identifies whether or not sub-resources for that user are provided in a specific transmission

Preferably, the physical layer resources comprise a particular frequency band and the sub-resources comprise frequency chunks within the band.

In one embodiment, the group comprises all mobile users scheduled by the base station.

Patent document WO 02/23760 A1, 21.03.2002, describes methods for scheduling in a wireless communication system.
An example of a method of scheduling groups of mobile users according to the present invention will now be described in which:

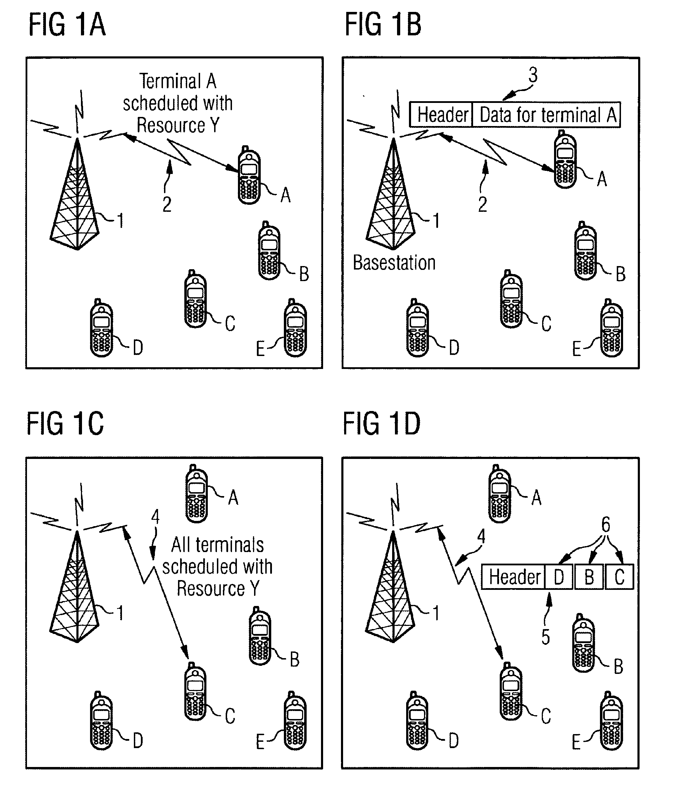

Figures 1a to 1d illustrate a system for carrying out the method of the present invention

The invention addresses the problem of multiplexing very low rate data to users of a fast scheduled packed mobile radio system, where the amount of data to be transmitted to each user is much smaller than the smallest resource than can be allocated by the scheduler. The particular radio system under consideration is orthogonal frequency division multiple access (OFDMA) based, but the invention can be applied to other access schemes, such as code division multiple access (CDMA).

In a fast scheduled packet radio system, a basestation scheduler allocates downlink and uplink physical resources to users in a dynamic fashion. In an OFDMA system, these resources are time/frequency chunks; whereas in a CDMA system the resources might be parts of a code tree. Users decode resource if indicated to do so, but otherwise do not listen to resources allocated for other users.

For maximum scheduling efficiency, the minimum size of resource that can be allocated to a user should be kept as small as possible, in order that low data rate users can be served efficiently. However as the size of allocated resources becomes smaller, the amount of signalling overhead required to support the scheduling increases.

Typically, a specific signalling channel will be used for indicating to a user which physical downlink resources the user should listen to. In wideband CDMA (WCDMA) systems, an example of such signalling is the high speed shared control channel (HS-SCCH). The signalling generally contains an indication of the identity of the intended recipient and the location of downlink (DL) resources on which data should be received.

Consider in particular an OFDMA system in which time and frequency chunks are allocated to users. In the context of 3^{rd} generation partnership project (3GPP) systems, a typical downlink minimum chunk size might consist of 300 to 1200 bits, dependent on the type of modulation used. A typical uplink chunk size might be as large as 750 to 3000 bits. Certain types of transmission, for example speech frames, gaming information, control information, or transmission control protocol/internet protocol (TCP/IP) acknowledgements (ACKs) however might generate significantly fewer bits than this and yet be time critical, thus preventing the accumulation of data for a UE before transmitting. Utilising the minimum resource allocation in such cases, typically 25 tones by 6 symbols for OFDMA, leads to a wastage of resources.

To avoid invoking a large amount of signalling overhead, reasonably large resource allocation chunks are preferable. Furthermore, for signalling efficiency it is preferable that the basic scheduling signalling channel has a restricted amount of formats. This invention reconciles these aspects with the need to cope with low data rate users.

In the present invention, in addition to individual identities, scheduling of physical resources can be made with identities that relate to groups of terminals or in the extreme case, all of the terminals that are served by the scheduler. If a downlink physical resource allocation is made using such an identity, each terminal checks whether it is able to decode the indicated resources. Each terminal that can do so decodes. The "scheduling" might be applied for a single time instant and PDU or at regular intervals over a longer time duration.

The transmitted PDU is made up of multiple sub-PDUs, each of which is intended for a different terminal. The identity of the terminal for which each sub-PDU is intended is indicated using a MAC, or similar higher layer, header. Such a scheme is only be applicable for the downlink.

The gain achieved using the proposed invention depends on the size of the MAC header that indicates which sub-PDUs are for which users. The size of the MAC header might be reduced by, for example using a predefined ordering of users together with a single bit indicator for each user whether that user does or does not have data.

Alternatively, a known sub-resource partition within the scheduled resource for the group of users indicated to decode the resource could be allocated in advance; for example in an OFDMA system a subset of time/frequency tones. In this case, no joint coding or higher layer header would be necessary and potentially different modulation formats could be used for different terminals. Such a scheme can also be applied in the uplink as well as in the downlink.

The present invention is illustrated in Figure 1. In Fig. 1a, a basestation 1 which communicates with terminals A to E sends 2 a scheduling allocation of resource Y intended for terminal A From Fig.1b, it can be seen that only terminal A decodes a protocol data unit (PDU) 3 comprising a header and data for terminal A. Fig.lc shows how the scheduler then makes a resource allocation 4 with an identity that is recognised by all terminals A, B, C, D and E and Fig. 1d shows the PDU 5 contains three sub-PDUs 6 for terminals D, B and C. A MAC header indicates which sub-PDU is intended for which terminal.

The present invention combines fast scheduling of physical resources by the base station with the added aspect of allowing for groups of terminals to be scheduled the same physical resource simultaneously and uses a higher layer header in transmitted PDUs to allocate sub-sections of the PDU to different terminals at MAC or higher layers, or using a pre-defined partitioning of the resources between the terminals in the group. The physical resources that are scheduled are shared; i.e. basestations only decode the resources if indicated to, on a transmit time interval (TTI) basis. Which basestation decodes depends upon radio conditions and which TTI it is.

The advantages of the present invention include a better use of resources, by means of using scheduling units to transmit to multiple users, rather than leaving sections of the chunks empty as would be the case where a chunk is allocated to only one user and the user does not have sufficient data to fill the chunk and the feature of an increase in coding gain by coding resources for multiple users together.

## Claims

1. A method of scheduling groups (4) of mobile low rate data users, the method comprising setting a group identifier for each mobile low rate data user; scheduling by a scheduler physical layer resources a base station for those mobile low rate data users requiring resources; wherein the amount of data to be transmitted to/from each mobile low rate data user is significantly smaller than the smallest resource that can be allocated by the scheduler; and wherein the physical layer resources are divided into sub-resources shared between mobile low rate data users having the same group identifier; and providing an indication (5) with the physical layer resources, of the occurrence and position within the physical layer resources of the sub-resources allocated to each mobile low rate data user in one of the groups.

2. A method according to claim 1, wherein the physical layer resources comprise a protocol data unit, PDU, and the sub-resources comprise sub-PDU's.

3. A method according to claim 1 or claim 2, wherein the indication is provided in a higher layer header.

4. A method according to claim 3, wherein the header is a medium access control header.

5. A method according to any preceding claim, wherein the position of sub-resources for each user, within the physical layer resources, is pre-allocated; and the indicator identifies whether or not sub-resources for that user are provided in a specific transmission.

6. A method according to any preceding claim, wherein the physical layer resources comprise a particular frequency band and the sub-resources comprise frequency chunks within the band.

7. A method according to any preceding claim, wherein the group comprises all mobile users scheduled by the base station.

## Patentansprüche

1. Verfahren zur Planung von Gruppen (4) von mobilen Nutzern mit niedrigen Datenraten mit Festlegen einer Gruppenkennung für jeden mobilen Nutzer mit niedriger Datenrate; Planen durch eine Planungseinheit von Ressourcen auf der physikalischen Schicht in einer Basisstation für diejenigen Nutzer mit niedriger Datenrate, die Ressourcen anfordern; wobei die zu/von jedem Nutzer mit niedriger Datenrate zu übertragende Datenmenge deutlich geringer ist als die kleinste Ressource, die durch die Planungseinheit zugeteilt werden kann; und wobei die Ressourcen der physikalischen Schicht in Teilressourcen aufgeteilt und zwischen den mobilen Nutzern mit niedriger Datenrate verteilt werden, die die gleiche Gruppenkennung aufweisen; und Bereitstellen einer Anzeige (5) innerhalb der Ressourcen der physikalischen Schicht für das Auftreten und die Lage innerhalb der Ressourcen der physikalischen Schicht der jedem mobilen Nutzer mit niedriger Datenrate in einer der Gruppen zugeteilten Teilressourcen.

2. Verfahren nach Anspruch 1, wobei die Ressourcen der physikalischen Schicht eine Protokolldateneinheit PDU umfassen und die Teilressourcen Teil-PDU umfassen.

3. Verfahren nach Anspruch 1 oder Anspruch 2, wobei die Anzeige in einem Header einer höheren Schicht bereitgestellt wird.

4. Verfahren nach Anspruch 3, wobei der Header ein Medium Access Control Header ist.

5. Verfahren nach einem beliebigen vorhergehenden Anspruch, wobei die Lage der Teilressourcen für jeden Nutzer innerhalb der Ressourcen der physikalischen Schicht im Voraus zugeteilt wird; und die Anzeige kennzeichnet, ob Teilressourcen für diesen Nutzer in einer bestimmten Übertragung bereitgestellt werden oder nicht.

6. Verfahren nach einem beliebigen vorhergehenden Anspruch, wobei die Ressourcen der physikalischen Schicht ein bestimmtes Frequenzband umfassen und die Teilressourcen Frequenzblöcke innerhalb des Bandes umfassen.

7. Verfahren nach einem beliebigen vorhergehenden Anspruch, wobei die Gruppe alle durch die Basisstation geplanten mobilen Nutzer umfasst.

## Revendications

1. Procédé de programmation de groupes (4) d'utilisateurs mobiles de données bas débit, le procédé comprenant la définition d'un identifiant de groupe pour chaque utilisateur mobile de données bas débit ; la programmation par un programmateur de ressources de couche physique au niveau d'une station de base pour les utilisateurs mobiles de données bas débit demandant des ressources ; dans lequel la quantité de données devant être transmise à/de chaque utilisateur mobile de données bas débit est significativement plus petite que la ressource la plus petite qui peut être attribuée par le programmateur ; et dans lequel les ressources de couche physique sont divisées en sous-ressources partagées entre utilisateurs mobiles de données bas débit ayant le même identifiant de groupe ; et la fourniture d'une indication (5) avec les ressources de couche physique, de la présence et de la position au sein des ressources de couche physique des sous-ressources attribuées à chaque utilisateur mobile de données bas débit dans un des groupes.

2. Procédé selon la revendication 1, dans lequel les ressources de couche physique comprennent une unité de données de protocole, PDU, et les sous-ressources comprennent des sous-PDU.

3. Procédé selon la revendication 1 ou la revendication 2, dans lequel l'indication est fournie dans un en-tête de couche supérieure.

4. Procédé selon la revendication 3, dans lequel l'en-tête est un en-tête de contrôle d'accès au support.

5. Procédé selon une quelconque revendication précédente, dans lequel la position des sous-ressources pour chaque utilisateur, au sein des ressources de couche physique, est pré-attribuée, et l'indicateur identifie si les sous-ressources pour cet utilisateur sont ou non fournies dans une transmission spécifique.

6. Procédé selon une quelconque revendication précédente, dans lequel les ressources de couche physique comprennent une bande de fréquences particulière et les sous-ressources comprennent des fragments de fréquence au sein de la bande.

7. Procédé selon une quelconque revendication précédente, dans lequel le groupe comprend tous les utilisateurs mobiles programmés par la station de base.
